Europäisches Patentamt

European Patent Office

Office européen des brevets

(11) Publication number: 0 403 222 A2

# EUROPEAN PATENT APPLICATION

(21) Application number: 90306380.8

(22) Date of filing: 12.06.90

(51) Int. Cl.5: G21C 15/02

(30) Priority: 13.06.89 US 366002

(43) Date of publication of application:
19.12.90 Bulletin 90/51

(84) Designated Contracting States:
CH DE ES IT LI NL SE

(71) Applicant: GENERAL ELECTRIC COMPANY
1 River Road
Schenectady, NY 12345(US)

(72) Inventor: Gluntz, Douglas Marvin
1329 Glen Dell Drive
San Jose, California 95125(US)

(74) Representative: Smith, Thomas Ian Macdonald
et al
London Patent Operation G.E. Technical
Services Co. Inc. Burdett House 15-16
Buckingham Street
London WC2N 6DU(GB)

(54) Method for obtaining load-following capability in natural circulation boiling water reactors.

(57) The present invention discloses an improved methodology for achieving the desirable feature of recirculation flow control in a natural-circulation BWR, enabling reactors utilizing the method to perform in load-following modes of power operations. In its broadest aspects, the method is based on shunting (36,38) adjustable amounts of coolant from the downcomer region (17) or core annulus region of a natural-circulation BWR to the core upper plenum region (26). This coolant thereby by-passes the portion of the ordinary natural--circulation flow path that would take the coolant down to the bottom of the reactor where it flows into a plenum (22) underneath the nuclear core (24) and thence (for the substantial majority of such coolant) flows upward through fuel assemblies and only then into the core upper plenum region. The key effect of such shunting/by-passing is to reduce the differential hydrostatic head available for circulating coolant through this latter flow path, i.e. through the fuel assemblies, and the rate of coolant flow along this flow path thus diminishes in accordance with the amount of flow hydrostatic head reduction in accordance with well-known principles.

FIG. 1

# METHOD FOR OBTAINING LOAD-FOLLOWING CAPABILITY IN NATURAL CIRCULATION BOILING WATER REACTORS

The present invention relates to nuclear boiling water reactors (BWRs) that utilize natural circulation and more particularly to enabling load-following capability in such reactor designs.

Existing large BWRs are of the forced-circulation type. In BWRs undergoing power generation operations, reactor coolant, initially in the form of sub-cooled liquid (e.g. water), is circulated by main coolant recirculation devices (e.g. jet pumps or mixed-flow motor-driven pumps) around a path a portion of which is comprised of the core lower plenum region (located at the bottom most section of the reactor), thence through the nuclear core and into a core upper plenum in communication with the core. Flow exiting the core upper plenum then passes through standpipes that lead to an assembly of steam separators. The reactor coolant exiting the nuclear core and passing into the core upper plenum is a two-phase mixture of steam and water, the proportion of which varies depending upon such factors as the power output from the fuel bundles, the amount of sub-cooling present in the coolant entering the fuel bundle, and the amount of flow through the bundles. This last factor depends on the power of the recirculation pumps and the hydrodynamic flow resistance presented by the fuel bundle geometry and wetted surfaces, and the amount of orificing representing restrictions to flow just prior to the coolant's entrance into the core fuel assembly.

Joining with the core effluent in the core upper plenum is the core "by-pass" flow, which is reactor coolant that has flowed from the core lower (entrance) plenum into the region external to the fuel assembly channels (but inside the core shroud), thence upwardly generally through the region occupied by cruciform-shaped control blades which stand in various degrees of insertion into the core, thence across the upper grid member (called the "top guide") which with its lattice-like configuration keeps the fuel assemblies in a regular array, and finally into the core upper plenum. This by-pass coolant stream at its discharge into the core upper plenum is comprised substantially of saturated liquid, with perhaps a small amount of steam. Within the core upper plenum, these two effluents-- by-pass flow and fuel bundle exit flow--rapidly mix together and quickly lose identity from their origins.

Mechanical steam separation can be utilized to accomplish the separation of the steam from the steam/water mixture exiting the core. Some earlier BWR designs used free-surface steam separation where, just as in the household tea kettle, steam separates unaided from the free-surface, and saturated water remains in the bulk coolant, which in BWRs is recirculated back down the downcomer annulus. This type of steam separation is feasible so long as the steam-leaving velocity, i.e. the bulk average velocity of the steam taken across the available pathway flow area, is no greater than about 1.8 foot/second. If steam-leaving velocities exceed this value, there tends to be carried along with the steam an unacceptably high moisture content. The high moisture levels saturate the moisture-drying abilities of the steam dryer, thus resulting in an unacceptably high moisture content in the steam leaving the reactor and supplied to the turbine. When steam moisture contents are too high in the turbine steam flow, accelerated erosion can occur on first-stage turbine blades.

It is possible to obtain free-surface separation capabilities if the reactor pressure vessel (RPV) cross-sectional area is made sufficiently large. However, cost economies dictate that minimum diameter RPVs be used, so that mechanical steam separation has been developed to handle the high power output steam production levels of modern BWRs. In these latter designs, the steam bulk average velocity moving through the wet steam plenum region immediately downstream of the mechanical steam separators is about 5 feet/second.

The fuel assemblies grouped over the central region of the core tend to have higher exit steam qualities than do bundles located at the peripheral region of the core. It is desirable, nonetheless, that the flow rates and steam/water mixture proportions entering the steam separator standpipes be relatively uniform. To facilitate gaining a more nearly uniform steam/water mixture for entry into the standpipes, the standpipe entrances are separated from the fuel assemblies by a distance of, for example, about 5 feet. Turbulent mixing occurring between the plumes leaving adjacent fuel assemblies, each with a different void content, is one mechanism acting to produce a more nearly uniform mixture which enters into the steam separator standpipes. More important to achieving flow mixture uniformity, however, is the hydrodynamic flow resistance represented by the standpipes, each with their end-mounted steam separators. Complete flow mixture uniformity entering the standpipes is at best difficult to achieve and, even with a five-foot separation between fuel assembly exits and standpipe entrances, it is not a design basis used for reactor performance evaluations.

The steam separator assembly consists of a domed or flat-head base on top of which is welded an array of standpipes with a three-stage steam separator, for example, located at the top of each standpipe. One function of the standpipes is to provide a stand-off separation of the larger-diameter steam separators, which are generally arranged in a particularly tightly-compacted arrangement in which external diameters of adjacent separators are nearly touching with each other, so that separated liquid coolant discharged at the bottom of the separator has a more "open" flow path outwardly from the reactor longitudinal axis and out to the downcomer annulus region which lies at the inboard periphery to the RPV. A second purpose for the standpipes in a high-power-output natural-circulation reactor using mechanical steam separators is to provide juxtaposed regions which promote natural-circulation by means of a vertical region of two-phase (and, thus, low-density) coolant inside the standpipes which is juxtaposed against single-phase liquid coolant outside the standpipes in a so-called "downcomer region", in which region height provides a very significant part of the total natural circulation driving head for coolant flow circulation within the reactor.

The steam separator assembly rests on the top flange of the core shroud and forms the cover of the core discharge plenum ("core upper plenum") region. The seal between the separator assembly and core shroud flange is a metal-to-metal contact and does not require a gasket or other replacement sealing devices. The fixed axial flow type steam separators have no moving parts and are made of stainless steel, for example, to resist corrosion and erosion.

In each separator, the steam/water mixture rising through the standpipes (the "standpipe region") impinges upon vanes which give the mixture a spin, thus establishing a vortex wherein the centrifugal forces separate the water from the steam in each of three stages. Steam leaves the separator at the top of this assembly and passes into the wet steam plenum below the dryer. The separated water exits from the lower end of each stage of the separator and enters the pool (the "downcomer region") that surrounds the standpipes to join the downcomer flow. The steam exiting from all separators either may be in the same horizontal plane, or the separators may be arranged in a slightly crowned fashion at the center to compensate for a crowned water gradient of the pool surrounding the standpipes.

The steam separator assembly may be bolted to the core shroud flange by long hold-down bolts, or the separator together with the dryer assembly may be held down onto the core shroud flange by contact from the reactor head when the latter is assembled to the reactor vessel. The nominal volumetric envelope of the steam separator assembly is defined by the horizontal plane of its lower flange that contacts the core shroud flange, its cylindrical sides that provide part of the five-foot stand-off from the fuel assembly exits, the circumscribed diameter of the outermost row of standpipes, the circumscribed diameter of the outermost row of steam separators, and the generally horizontal plane of the exits to the steam separators.

The core upper plenum region in a BWR currently under design known as the "simplified boiling water reactor" (SBWR) is substantially devoid of other mechanical devices, pipes, or structures; whereas the core upper plenum of a BWR/6 and "advanced boiling water reactor" (ABWR) reactor design generally contains spargers and nozzles for core sprays, and distribution headers for core flooders, respectively. In both reactor types, these spargers/headers are located at the outer periphery of the core upper plenum, mounted below the core shroud flange so that the sparger/header is clear of the refueling removal path of peripheral fuel assemblies and, thus, do not become removed during core refueling operations.

With specific reference to a natural-circulation SBWR, it will be observed that there are no recirculation pumps to aid in coolant recirculation. Steam generation in the core produces a mixture of steam and water which, because of steam voids, is less dense than saturated or sub-cooled water. Thus, the boiling action in the core results in buoyancy forces which induce core coolant to rise upwardly, to be continuously replaced by non-voided coolant arriving from beneath the core in the core lower plenum region. As the coolant leaves the core, it rises through the core upper plenum region, then through the standpipes region and finally into the steam separators. This voided mixture inside these standpipes continues to be less dense than non-voided coolant external to the standpipes, resulting in the development of additional buoyancy force to further drive the coolant circulation. That this process is quite effective in promoting coolant recirculation can be noted from reported tests made in forced-circulation power reactors where the coolant circulation pumps are shut off. Even with their relatively short steam separator standpipes, reactor power levels of 25% and coolant flow rates of 35% of rated flow, are readily and safely maintainable.

The SBWR reactor is but modestly different from the forced-circulation BWR, with the most prominent differences being that the standpipes region is to be considerably longer in the SBWR (to develop a higher differential head), the core overall height may be somewhat shorter (for example, being 8 or 9 feet * active fuel length versus 12.5 feet * active fuel length in recent forced-circulation reactors), and the core power density will be somewhat lower. The severity of orificing--a means to promote hydrodynamic stability--at the entrance to the BWR fuel bundles may be lessened. The fuel bundle may have a larger diameter fuel rod in, for example, a 6 x 6 rod array, whereas the rod array for a forced-circulation reactor often is an 8 x 8 rod array. The design flow rates per fuel bundle, and the flow rates per steam separator, will be somewhat reduced in the SBWR design. Fuel exit steam quality will be approximately the same between the two designs. In the SBWR reactor design, no spargers or discharge headers are installed in the core upper plenum, while in the ABWR reactor, spargers or discharge headers are installed in the upper core plenum.

In some versions of SBWR reactors under study, the standpipes are very long while the core upper plenum is short. In other versions, the converse is true. The present invention is applicable equally in either version.

"Load-following" is the action of bringing the power output of a BWR into balance with an incrementally changed power output demand. This demand change arises from the electrical grid to which the nuclear power station is coupled and represents a change from prior steady-state (balanced) operating conditions.

By way of illustration, assume that an SBWR is operating at 90% of rated power output. Existing within the core will be some certain distribution of voids, i.e., steam vapor in the form of steam bubbles. The lowermost parts of the fuel assemblies will contain non-voided coolant because of the sub-cooled liquid conditions existing in the core lower plenum, the source for water entering the core. Partway up the flow path within the fuel assemblies, steam generation begins, so that a steam/liquid mixture develops with the steam proportion rising with increasing travel upward through the fuel assembly. Control blades immediately outside the fuel assembly channels will stand in various degrees of withdrawal from the core depending on the particular point the core has reached in its fuel cycle lifetime.

The steam output from the nuclear boiler is coupled to a turbine generator, which, in turn, is coupled electrically to the grid. A nuclear boiler pressure regulation control system is installed, the action of which changes the position of turbine steam control valves in such a way so as to maintain constant the nuclear boiler pressure as measured in the reactor steam dome.

A change in grid electrical demand--say an incrementally increased demand for more electrical power from the power station--causes a signal to be sent to a control rod positioning system that results in incremental withdrawal of certain of the control blades still not fully withdrawn from the core. This withdrawal has the effect of making the reactor temporarily more reactive, allowing an increase in neutron flux, that, in turn, produces a higher rate of nuclear fission throughout the fuel rods. The thermal capacitance represented by the mass of the fuel material (uranium dioxide) briefly, i.e. for a few seconds, absorbs the thermal energy produced throughout the fuel rods as their internal temperature rises. (The fuel heat transfer thus lags the neutron flux, the transient response characteristic being that of, typically, a seven-second time constant.) Soon, however, the higher temperatures lead to greater heat transfer from the now-higher fuel clad temperature to the reactor coolant, and so an incrementally higher amount of steam is formed. In addition, the point where boiling first begins within the fuel assembly moves slightly downward in response to the higher heat transfer that is occurring. This combination of incrementally more voids in prior boiling regions, plus downward movement of the boiling boundary, now introduces negative reactivity effects that returns the reactor to a balanced, steady-state, power level, but one that is generating incrementally more steam. In response to the larger steam generation rate, to hold pressure constant in the reactor steam dome (as the control system mandates), the pressure regulation system progressively incrementally opens the turbine control valves, thus releasing a net greater quantity of steam to the turbine. Higher steam rates passing through the turbine produce the required incremental increase in ultimate response to the initiating electrical grid demand for more electrical power from the station.

The principles described above can be extended to those conversant with nuclear engineering practice to understand other types of power adjustments. It will be apparent that the foregoing illustration is the response to a small increase in load demand. Obviously, the adjustment of reactor power output also can be performed manually by the reactor operator, through his actions to cause control blades to be inserted farther into the core or withdrawn farther outward from the core.

Often, a nuclear power station is required to sustain larger load demand adjustments than the relatively small adjustment described above. Existing nuclear power stations are deficient in that it takes time to retract the control blades. Even when the control blades are moved in groups ("ganged rod movement"), it still requires time for the groups to be sequentially moved. An additional disadvan-

*2.4 to 2.7m vs. 3.8m

tage to load-following by control blade movement can be that the heating transients within the fuel occurring close to the ends of where the control blades are positioned, over time can produce undesirable stress-cycling on fuel cladding.

An alternative load regulation means that has been found effective for forced-circulation BWRs is to use recirculation flow control. A signalled change in reactor power demand is sent to a control system that adjusts the recirculation flow upward or downward. The recirculation flow is regulated either by changing the speed of the main recirculation pumps, or in other applications by throttling the output from constant-speed pumps by means of a flow-control valve. The changed flow causes a rather prompt change in the amount of voids in the core and a similar change in the position of the boiling boundary within the fuel assemblies within the core. For example, the action response in the recirculation flow control system to an incremental demand for more reactor output would be to raise the rate of recirculation flow. This sweeps some existing voids out of the core, and raises the position of the boiling boundary. In turn, neutron flux rises, fission rate increases, and shortly a higher total amount of steam is being generated. With the reappearance of "near-normal" levels of voids in the core in response to the higher power output, the reactor condition returns to a "steady-state", but now at a higher output leveL The two advantages of recirculation flow control are that the rates of change in reactor power can be faster; and since control blades are not required to be moved, no additional significant stress-cycling duty is imposed on the fuel rods.

To date, however, natural-circulation reactors have had only control rod movement available to them as a load-following means. As described earlier, a drawback with this mode of load-following control, i.e. performing load-following by moving control blades, is that it can be a slow-acting system because there are so many blades which must be moved some variable small amounts to effect a change while keeping the neutron flux profiles in desirable patterns. Thus, for various modes of power operation, it would be desirable for there to be other methods of more rapidly, yet controllably, affecting reactor power output, and thereby provide enhanced capability to perform a wider envelope of load-following maneuvers.

There is herein disclosed an improved methodology for achieving the desirable feature of recirculation flow control in a natural-circulation BWR, enabling reactors utilizing the method to perform in load-following modes of power operations. In its broadest aspects, the method is based on shunting adjustable amounts of coolant from the annulus region and/or downcomer region of a natural-circulation BWR to the core upper plenum region. This coolant thereby by-passes the portion of the ordinary natural-circulation flow path that would take the coolant down to the bottom of the reactor where it flows into a plenum underneath the nuclear core and thence (for the substantial majority of such coolant) flows upward through fuel assemblies and only then into the core upper plenum region. The key effect of such shunting/by-passing is to reduce the differential hydrostatic head available for circulating coolant through this latter flow path, i.e. through the fuel assemblies, and the rate of coolant flow along this flow path thus diminishes in accordance with the amount of flow hydrostatic head reduction in accordance with well-known principles.

Accordingly one embodiment of the invention provides a natural-circulation nuclear boiling water reactor of the type wherein housed within reactor pressure vessel (RPV) is a nuclear core disposed within a shroud which with the RPV defines an annular "annulus" region which is in flow communication with a core lower plenum region disposed beneath the nuclear core. A core upper plenum formed within the head of the shroud is disposed atop the nuclear core. A plurality of vertically-mounted standpipes mounted atop the shroud head is in fluid communication with the core upper plenum. A steam separator assembly is mounted atop and is in fluid communication both with the standpipes and with the downcomer region that lies external to the standpipes. The downcomer region is in fluid communication with the annulus region to complete the water flow path. The improvement for obtaining load-following capability comprises disposing a valve at the shroud head for providing flow communication of water from said downcomer and/or annulus region to within said core upper plenum. A valve control mechanism is connected to the valve and is controllable from outside of the RPV to provide regulation of the valve.

In accordance with another embodiment of the invention, load following is achieved by actuating the valve control mechanism to controllably vary the amount of water directly entering the core upper plenum (without having passed through the core fuel assemblies or by-pass flow path) to provide load-following for the natural-circulation nuclear BWR. Two practical alternative configurations of common reactor internals with modifications and/or additional components are described as illustrations of the application of the invention to reactor design.

Advantages of the present invention include a new and novel means for providing load-following capability for natural-circulation BWRs. Another advantage of the present invention is the ability to provide adjustable regulation of the coolant recirculation flow rate in natural-circulation BWRs. A further advantage of the present invention is the ability to simply and practically implement the present invention within the confines of conventional natural-circulation BWR design concepts. These and other advantages will be readily apparent to those skilled in the art based upon the disclosure contained herein.

In the accompanying drawings:

Fig. 1 is a simplified cross-sectional elevational view of a natural-circulation BWR showing one practical configuration for implementing the present invention;

Fig. 2 is an exploded partial cross-sectional elevational view of the valve control mechanism for controllably varying the amount of water permitted to directly enter the core upper plenum;

Fig. 3 is like Fig. 1, and illustrates a second practical configuration for implementing the present invention; and

Fig. 4 is a simplified diagram for a BWR which depicts the hydrostatic head (referenced to the normal water level) along the downwardly flowing coolant flow path both for a conventional natural-circulation BWR and for a BWR modified in accordance with the precepts of the present invention.

The drawings will be described in detail below.

Forced-circulation reactors employ a form of recirculation flow control to achieve load-following capability which control generally is amply rapid and effective. In certain BWRs, the head developed by the main recirculating devices is adjusted by regulating the speed of the prime drive motor so as to produce a controlled recirculation flow rate. Other BWRs throttle the recirculation flow with flow control valves located in external recirculation loops to obtain flow rate regulation. The general response mode of a reactor to changes in coolant flow rate is quite analogous to the response mode described above.

Neither method, however, is conveniently or economically open to natural-circulation reactors because there are no main circulating devices nor any external loops, because one of the prevailing design goals for SBWRs is that of "arrangement simplicity", which is not promoted if external loops have to be provided. Moreover, trying to adapt the method of throttling the core entrance flow (i.e., the downcomer flow) offers major arrangement and cost difficulties to the BWR designer because of the generally limited annular gap, yet large annular peripheral length, that must be addressed by valve-type devices and valve operators. Installing such means would very probably introduce unacceptable additional irreversible flow losses for the 100% power operation conditions.

Irreversible head losses anywhere along the reactor coolant circulation path are penalizing to the economy of the RPV and/or the nuclear steam supply system (NSSS). For natural-circulation SBWRs, irreversible head loss means that greater standpipes/downcomer height has to be provided, and this means that the RPV possibly has to be made taller which leads to an additional penalty of providing a taller containment. This suggests that both the RPV and containment might be more costly.

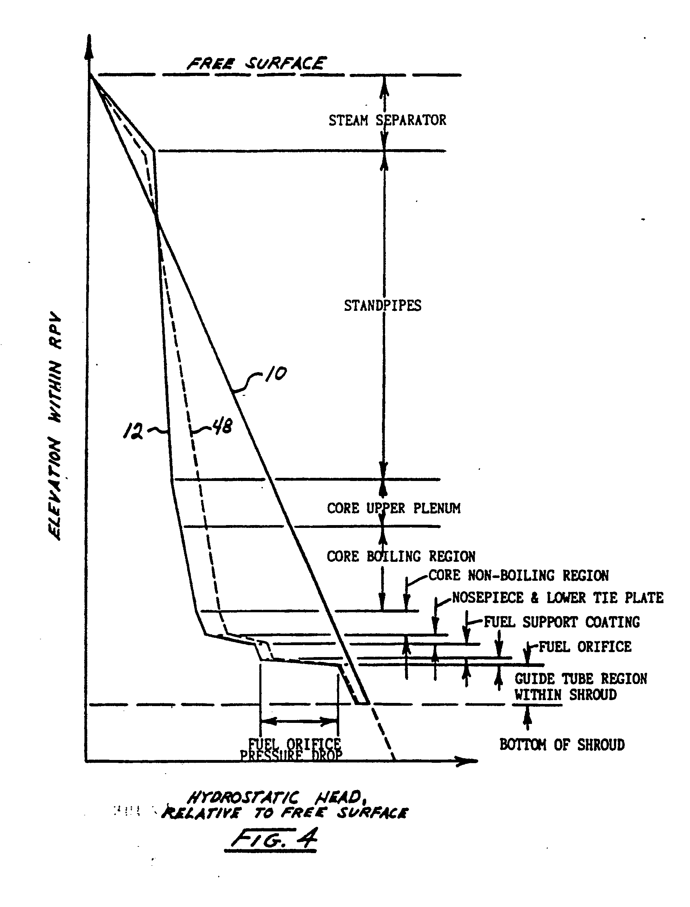

A problem to be solved, then, is to devise an improved means of obtaining effective load-following capability in SBWRs and for which the drawbacks in the form of added components and/or larger RPV and containment sizes, as well as irreversible flow losses at the 100% operating condition, all are minimally affected and are quite acceptable considering the benefits obtained. In order to appreciate such problem, reference is made to Fig. 4 which is a simplified diagram for an SBWR reactor of a version having relatively long standpipes, which depicts the hydrostatic head, relative to the free surface, as a function of the elevation within the RPV. Specifically, curve 10 depicts the hydrostatic head along the downwardly flowing coolant flow path comprising the downcomer region and annulus region that brings liquid coolant separated from steam separators down to the lowermost region of the core shroud and thence into the core lower plenum region disposed beneath the nuclear core. Coolant flow then turns around and commences a flow path as indicated by curve 12. This flow path includes the guide tube region within the shroud and below the core, and the fuel orifice which provides a relatively large pressure drop. The flow then commences past the fuel support casting, nosepiece and lower tie plate, and into the fuel assemblies housed within the core. A non-boiling region and a core boiling region are located within the fuel assemblies. From the core, the flow passes to the core upper plenum, thence into the standpipes, and finally into the steam separators. The pressure losses occasioned by such flow path clearly can be seen by reference to Fig. 4. With respect to the reactor internals described above and illustrated at Fig. 3, reference is made to the following publications: Glasstone and Sesonske, Nuclear Reactor Engineering, pp 748-753, 3d Edition, VanNostrand, Reinholt (New York, NY, 1981); Wolfe and Wilkens, "Improvements in Boiling Water Reactor Designs and Safety", presented at American Nuclear Society Topical Meeting, Seattle, Washington, May 1-5, 1988; Duncan and McCandless, "An Advanced Simplified Boiling Water Reactor", presented at the American Nuclear Society Topical Meeting, Seattle, Washington, May 1-5, 1988; and Lahey and Moody, The Thermal Hydraulics of a Boiling Water Nuclear Reactor, especially Chapter 2, pp 15-44, American Nuclear Society (LeGrange Park, III. 1977). Conventional BWRs, the ABWR, and the SBWR, all are described and discussed in the foregoing references, all of which are expressly incorporated herein by reference.

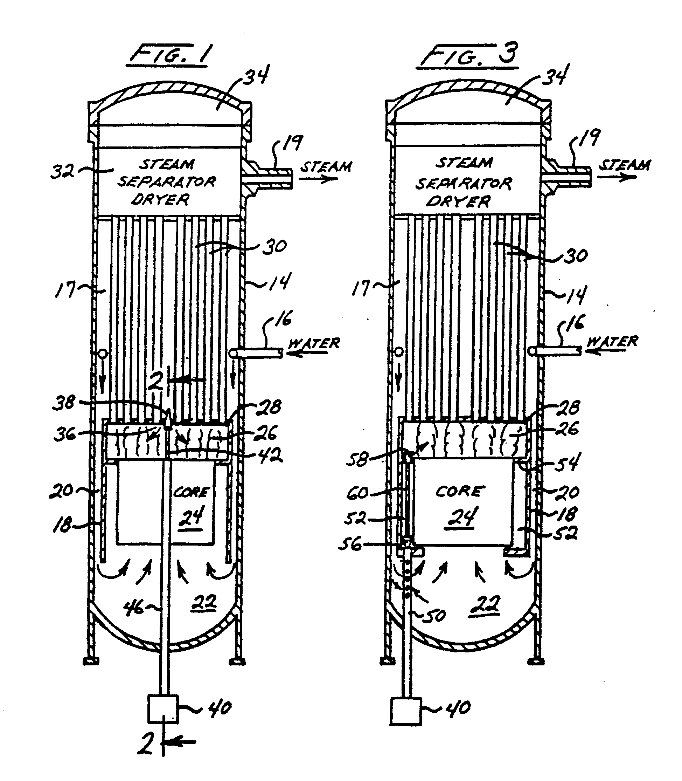

With respect to shunting adjustable amounts of downcomer coolant directly into the core upper plenum, reference is made to Fig. 1 in which is set forth one configuration of practical reactor internal components characterizing the application of the invention to a natural-circulation BWR. In its simplest aspects, reactor pressure vessel (RPV) 14 is seen to admit water via inlet 16 and exhaust steam via outlet 19, thus, providing the ultimate operation of a nuclear boiling water reactor. As described generally above and in particular in the references cited, sub-cooled water located in the downcomer region identified at 17 flows downwardly between RPV 14 and shroud 18 in the annulus region identified at 20. The water flowing through annulus region 20 then flows to the core lower plenum region identified at 22. For simplicity, many of the reactor internal components have not been illustrated in Figs. 1 and 3 as these items are conventional as will be readily apparent to those skilled in the art.

The guide tube region located within shroud 18 and below core 24 represents another area where pressure drop is seen. The water then flows through the fuel orifices and past the fuel support casting and nosepiece lower tie plates which represent additional pressure drops within the flow loop. Again, these are not specifically illustrated but are to be provided in conventional fashion. The water then enters the fuel assemblies disposed within core 24 wherein a boiling boundary layer is established, thus causing a lower non-boiling region and an upper boiling region within the fuel assemblies. In conventional fashion, flow by-passing is to be provided as is necessary, desirable, or convenient in conventional fashion.

Next, a mixture of water and steam enters core upper plenum 26 which is formed within shroud head 28 and disposed atop core 24. Core upper plenum 26 provides stand-off between the mixture exiting core 24 and entering standpipes 30 that are disposed atop shroud head 28 and in fluid communication with core upper plenum 26. It will be observed that downcomer region 17 is formed between the walls of RPV 14 and standpipes 30.

The mixture flowing through standpipes 30 then enters steam separator/dryer assembly 32 that is to be provided in conventional or unconventional fashion. Separator 32 provides outlet corn munication for separated water to enter downcomer region 17 and for steam to enter dome 34 and thence to be withdrawn from RPV 14 via outlet 19. The separated water in downcomer region 17 and feedwater from the turbine island portion of the power generating station admitted via inlet 16 then combine and the flow circulation continues endlessly.

It will be observed that there is no provision for pumps or other devices to artificially stimulate or diminish the volume of water and its consequent flow rate in the flow path above-described, thus not enabling the reactor to have appreciable load-following capability in the absence of moving and repositioning the control rods. Accordingly, one means for altering the flow path of water for its direct entry from downcomer region 17 or annulus region 20 directly into core upper plenum 26 is achieved by valve-like assembly 36 disposed within shroud head 28. Assembly 36 will be seen to include a valve-seat mounted onto or integrally formed within shroud head 28. Within this valve seat or aperture formed within core shroud 28 is disposed plug 38 that is shown to be conical in exterior configuration, but can be provided with other suitable configurations in order to achieve its intended purpose.

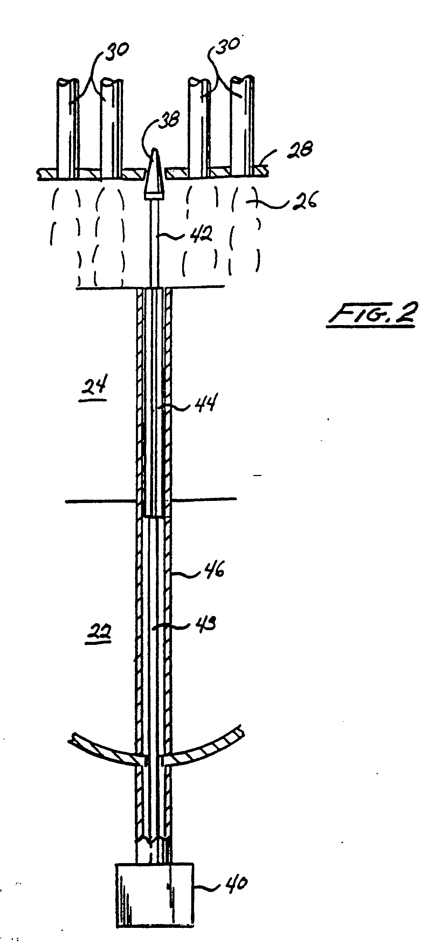

Attached to valve plug 38 of valve assembly 36 is valve control mechanism 40 which preferably is a Fine-Motion Control Rod Drive (FMCRD) mechanism that duplicates the fine-motion indexing control of control blades within the core. The selection of an FMCRD mechanism is because such mechanism is an undeniably capable, reliable mechanism for the type of service the present application requires, though it will be readily apparent that other types of valve control mechanisms could be used without departing from the precepts of the present invention. Referring to Figs 1 and 2, briefly, an FMCRD mechanism adapted to the purposes of the present invention includes shaft 42 which is coupled to cruciform-shaped member 44 which has proportions and dimensions quite similar to those of an ordinary BWR control blade, but which is made from material innocuous to neutrons, e.g. zirconium. Cruciform member 44 passes through core 24 and is guided at its upper end by the channels of adjacent fuel assemblies and/or by faux-channels installed to provide such surfaces for guidance. At its lower end, cruciform member 44 is guided by tube member 46 having tube dimensions and lower-end fittings essentially identical to ordinary control rod guide tubes. Alternatively, a fuel support casting may be provided at the top of tube member 46 to support one or more fuel assemblies. Lower shaft 43 disposed in guide tube 46 is connected to cruciform member 44 at its upper end and to valve actuating mechanism 40 at its lower end.

As valve control mechanism 40 withdraws tapered plug 38 from the aperture within shroud head 28, the tapered plug presents a gradually increased flow cross-sectional area for downcomer and/or annulus flow to enter core upper plenum 26. Thus, regulated amounts of sub-cooled liquid in the downcomer region can enter core upper plenum 26 to join with the two-phase mixture arriving from the fuel assemblies and with saturated by-pass flow through core 24. Some of the steam will be quenched, and a net greater mass of two-phase coolant, now of reduced quality, will have to be processed by the fixed-flow resistance provided by standpipes 30 and steam/water separator portion of steam separator/dryer 32. The hydrostatic pressure within core upper plenum 26 now will adjust to being a larger value because of the larger flow losses caused by passing this larger mass flow rate through the fixed standpipe/separator components. Additionally, the density of the homogeneous steam/water mixture passing through standpipes 30 and steam separators located within unit 32 will be higher. This diminishes the buoyancy forces between the fluid column external to standpipes 30, i.e. downcomer region 17, and the fluid column internal to standpipes 30. Natural-circulation pumping head, therefore, is lessened. Since no increase in hydrostatic pressure has taken place at the bottom of core shroud 18, the pressure differential between core lower plenum 22 and core upper plenum 26 decreases. Accordingly, the recirculation flow rate through core 24 will decrease. Thus, adjustable regulation of the coolant recirculation flow rate through the core is obtained directly.

The foregoing recirculation flow rate control for providing load-following capability is diagramatically depicted at Fig. 4 also. With reference thereto, the new hydrostatic pressure profile diagramatically is depicted by curve 48. It will be seen that the reduced flow rate through core 24, as explained above, produces a reduced hydrostatic head differential between annulus region 20 and core 24 at all elevations up to and even beyond the elevation of core upper plenum 26. The pressure represented by curve 48 is closer to the pressure indicated by curve 10 everywhere along this portion of the flow circuit. The combination of both higher mass flow rate and, thus, higher irreversible pressure drop occurring within the portion of the flow circuit from core upper plenum 26 to the free surface; as well as the increased density of the homogeneous mixture and, therefore, less natural-circulation head (buoyancy), is seen to bring about a larger gradient of the hydrostatic pressure (gradient being the incremental change of hydrostatic pressure per incremental change in elevational position within the RPV) for the remaining portion of the line-segment of curve 48.

Quite obviously, a given reactor application may utilize a plurality of valve assemblies 36 as compared to the single-valve embodiment set forth at Fig. 1 as illustrative of the precepts of the present invention. Different types of valves additionally could be used as is necessary, desirable, or convenient. Also, valve plug 38 could be indexed upwardly or even laterally, as opposed to downwardly as illustrated at Fig. 1. As noted above, the valve seat could be directly attached to or fabricated integrally with core shroud head 28, or the seat could be positioned within a valve body or at the end of piping coupled to shroud head 28. Different locations for the combination valve seat and FMCRD valve operator radially outward from the RPV longitudinal centerline could be selected. Different types of valve control mechanisms additionally could be used with concomitant instrumentation incorporated to measure and/or detect a wide variety of valve-performance, valve-status, or fluid flow rate conditions.

As will be apparent from the foregoing discussion, subcooled water is housed within RPV at one location in addition to downcomer 17 and annulus region 20, viz. core lower plenum 22. Thus, there is an additional embodiment consistent with the concept involving shunting recirculation flow into core upper plenum 26 without its passing through fuel assemblies housed within core 24. This additional embodiment can be seen with reference to Fig. 3. In this embodiment, however, the flow route now is from core lower plenum 22 through fixed openings in tube member 50 which provides communication with the flow by-pass region of core 24, indicated at 52 for purposes of illustrating the present invention. Flow entering tube 50 is mixed with the normal by-pass flow in the by-pass region existing external to the fuel assembly channels but internal to core shroud 18.

Core top guide 54 is a thick, circular plate containing square holes for each set of four fuel assemblies surrounding a control blade. Smaller holes are provided for the peripheral fuel assemblies not adjacent to a control blade. When the fuel channels are installed, the square cut-outs provide lateral positioning on the outboard channel surfaces of the set of four fuel assemblies. Gaps formed across the inboard surfaces in each set provide a flow area by which core by-pass flow can enter core upper plenum 26. The feature of opening the flow area between lower core plenum 22 and core by-pass region 52 results in more coolant mass flow into core upper plenum 26, whereupon the objective of the invention is obtained, as described in connection with Fig. 1.

As an optional feature enabling yet more flow to by-pass the fuel assemblies disposed within core 24, second valve plug 58 is disposed within core top guide 54 and is coupled by shafts 60 and 61 for controlling its movement from outside of RPV 14. Coupling plugs 56 and 58 to both be operated by control valve mechanism 40 causes the by-pass flow areas in both valve seats in which the plugs are disposed to increase simultaneously. This optional arrangement, simply by the action of a single FMCRD, enables a greater shunting of recirculation flow from core lower plenum 22 into core upper plenum 26 by increasing the area in plate 54 through which the by-pass flow can pass into core upper plenum 26.

As to the materials of construction, preferably all components are manufactured from materials appropriate for their use within a nuclear BWR. Further, it will be appreciated that various of the components shown and described herein may be altered or varied in accordance with conventional wisdom in the field provided that such variations do not materially depart from the scope and precepts of the invention.

## Claims

1. A natural-circulation nuclear boiling water reactor (BWR) of the type wherein housed within a reactor pressure vessel (RPV) is a nuclear core disposed within a shroud having a shroud head and which with the RPV defines an annulus region which is in flow communication with a core lower plenum region disposed beneath said nuclear core, a core upper plenum formed within said shroud head and being disposed atop said nuclear core, a plurality of vertically-mounted standpipes mounted atop said shroud head and in fluid communication with said core upper plenum, the region outside said standpipes defining a downcomer region, a steam separator/dryer assembly mounted atop and in fluid communication with said standpipes and with said downcomer region, said downcomer region being in fluid communication with said annulus region,
characterized by the provision, for obtaining load-following capability, of:
a valve assembly disposed at said shroud head for providing flow communication of water from said downcomer region or annulus region to within said core upper plenum; and
a valve control mechanism connected to said valve and controllable from outside of said RPV to provide regulation of said valve assembly.

2. The BWR of claim 1 wherein said valve assembly comprises a valve seat retained by said shroud head and a tapered plug disposed therein.

3. The BWR of claim 1 wherein a plurality of said valve assemblies are retained by said shroud head.

4. The BWR of claim 1 wherein said valve control mechanism includes a first shaft attached to said valve assembly, said first shaft attached to the upper end of a cruciform-shaped member that retracts below and inserts back into said core, said cruciform member being guidingly retractable through a guide tube member that extends through portions of said lower core plenum, said cruciform member at its lower end being connected to a second shaft that is connected to a valve control mechanism positioned below and outside of said RPV to provide regulation of said valve assembly.

5. The BWR of claim 2 wherein said valve control mechanism includes a shaft attached to said tapered plug, said shaft attached to a cruciform-shaped member that passes through said core and is connected to a guide tube member that passes through said lower core plenum, said guide tube member in turn connected at its lower end to a control rod drive housing that extends through said RVP.

6. A natural-circulation nuclear boiling water reactor (BWR) of the type wherein housed within a reactor pressure vessel (RPV) is a nuclear core having a core by-pass flow and being disposed within a shroud having a shroud head and which with the RPV defines an annulus region which is in flow corn munication with a core lower plenum region disposed beneath said nuclear core, a core upper plenum formed within said shroud head and being disposed atop said nuclear core, a plurality of vertically-mounted standpipes mounted atop said shroud head and in fluid communication with said core upper plenum, the region outside said standpipes defining a downcomer region, a steam separator/dryer assembly mounted atop and in fluid communication with said standpipes and with said downcomer region, said downcomer region being in fluid communication with said annulus region,
characterized by the provision, for obtaining load-following capability, of:
a valve assembly disposed at said core lower plenum and arranged to provide fluid communication between said core lower plenum and said core by-pass flow; and
a valve control mechanism connected to said core lower plenum valve assembly and controllable from outside of said RPV to provide regulation of said valve assembly.

7. The BWR of claim 6 wherein said valve assembly includes an apertured guide tube which retains a valve therein for providing fluid corn munication between said core lower plenum and said core by-pass flow.

8. The BWR of claim 7 wherein said valve includes a seat disposed at said guide tube and a tapered plug disposed within said seat which is connected to said valve control mechanism.

9. The BWR of claim 6 which additionally has a core top guide which retains fuel assemblies in said core and with said shroud head forms said core upper plenum, a second valve mechanism retained by said core top guide, and a second valve control mechanism connected to said second valve mechanism for admitting core by-pass flow into said core plenum.

10. The BWR of claim 9 wherein both of said valve assemblies are connected to the same valve control mechanism for providing simultaneous operation thereof.

11. A method for obtaining load-following capability in a natural-circulation nuclear boiling water reactor (BWR) of the type wherein housed within a reactor pressure vessel (RPV) is a nuclear core, which includes fuel assemblies and a core by-pass flow, and being disposed within a shroud having a shroud head and which with the RPV defines an annulus region which is in flow communication with a core lower plenum region disposed beneath a nuclear core, a core upper plenum formed within said shroud head and being disposed atop said nuclear core, a plurality of vertically-mounted standpipes mounted atop said shroud head and in fluid communication with said core upper plenum, the region outside said standpipes defining a downcorner region, a steam separator/dryer assembly mounted atop and in fluid communication with said standpipes and with said downcomer region, said downcorner region being in fluid communication with said annulus region, which comprises:

admitting controlled amounts of water within said RPV directly into said core upper plenum without said water having passed through the fuel assemblies in said core for heating.

12. The method of claim 11 wherein said controlled amounts of water are admitted into said core upper plenum by:

disposing a valve assembly at said shroud head for providing flow communication of water from said downcomer region or said annulus region to within core upper plenum;

connecting a valve control mechanism operable from outside said RVP to said valve assembly; and

actuating said valve control mechanism to controllably vary the amount of water directly entering said core upper plenum to provide load-following capability.

13. The method of claim 11 performed in a BWR according to any of claims 1 - 10.

FIG. 1

FIG. 3

*FIG. 2*

*FREE SURFACE*

STEAM SEPARATOR

STANDPIPES

10

12 48

CORE UPPER PLENUM

CORE BOILING REGION

CORE NON-BOILING REGION

NOSEPIECE & LOWER TIE PLATE

FUEL SUPPORT COATING

FUEL ORIFICE

GUIDE TUBE REGION WITHIN SHROUD

BOTTOM OF SHROUD

FUEL ORIFICE PRESSURE DROP

*ELEVATION WITHIN RPV*

*HYDROSTATIC HEAD, RELATIVE TO FREE SURFACE*

*FIG. 4*